# EUROPEAN PATENT APPLICATION

(11) **EP 3 153 442 A1**
(43) Date of publication of application: **12.04.2017**
(21) Application number: 16192371.9
(22) Date of filing: 05.10.2016
(51) Int. Cl.: B66B 1/30

(54) **ELEVATOR SYSTEM BATTERY OUTPUT CONTROL**

(30) Priority: 09.10.2015 US 201562239418 P
(71) Applicant: Otis Elevator Company, Farmington, Connecticut 06032 (US)
(72) Inventor: BOGLI, Craig Drew, Farmington, CT Connecticut 06032 (US); LI, Zhenhong, Farmington, CT Connecticut 06032 (US)
(74) Representative: Klunker . Schmitt-Nilson . Hirsch

(57) **Abstract**

An elevator system (100) includes an elevator car (102); a machine (108) to impart force to the elevator car (102); a battery (18) to power at least one of the machine (108) and at least one load (20, 21); and a power distributor (19) to distribute power from the battery (18) to the machine (108) and the at least one load (20, 21).

## Description

The subject matter disclosed herein generally relates to elevator systems, and more particularly to an elevator system that includes an interface to control power provided to and from a battery.

Elevators use a wide variety of electrical systems, many of which include a battery. Existing elevator systems may contain several separate subsystems (e.g., maintenance-repair-operations, remote elevator monitoring, automatic recovery, lights, alarms, etc.), each of which incorporates a separate battery. Further, the elevator drive system may utilize a battery to power the machine that imparts force to the elevator car. Each of the various batteries is sized for a specific use, and each has its own charger and battery management circuit to prevent over charging and over discharging. The requirements of these specific battery applications frequently overlap with the each other. With each of these battery systems, periodic testing and replacement is required. Installation and maintenance of these multiple batteries is burdensome on operators of elevator systems.

According to one embodiment, an elevator system includes an elevator car; a machine to impart force to the elevator car; a battery to power at least one of the machine and at least one load; and a power distributor to distribute power from the battery to the machine and the at least one load.

In addition to one or more of the features described above, or as an alternative, according to further embodiments the battery may include a plurality of battery outputs; the power distributor may include a plurality of disconnects, each disconnect coupled to a respective battery output.

In addition to one or more of the features described above, or as an alternative, according to further embodiments the power distributor may include a current monitoring unit to monitor current at each of the battery outputs.

In addition to one or more of the features described above, or as an alternative, according to further embodiments the power distributor may include a processor, the processor controlling the plurality of disconnects in response to the current monitoring unit.

In addition to one or more of the features described above, or as an alternative, according to further embodiments the power distributor may include a processor, the processor executing a status module, the status module determining a status of the battery in response to the current monitoring unit.

In addition to one or more of the features described above, or as an alternative, according to further embodiments the status may include at least one of state-of-charge of the battery and state-of-health of the battery.

In addition to one or more of the features described above, or as an alternative, according to further embodiments the processor may control the plurality of disconnects in response to the status of the battery.

In addition to one or more of the features described above, or as an alternative, according to further embodiments the power distributor may include a processor, the processor executing a protection module, the protection module determining a fault in the battery in response to the current monitoring unit.

In addition to one or more of the features described above, or as an alternative, according to further embodiments the fault may include at least one of over-current, over-voltage, under-voltage, over-temperature and under-temperature.

In addition to one or more of the features described above, or as an alternative, according to further embodiments the processor may control the plurality of disconnects in response to the fault.

In addition to one or more of the features described above, or as an alternative, according to further embodiments at least one of the disconnects may be bidirectional.

In addition to one or more of the features described above, or as an alternative, according to further embodiments the at least one load may include at least one of elevator car lights, elevator car user interface, elevator car brake and elevators car door motor.

In addition to one or more of the features described above, or as an alternative, according to further embodiments the at least one load may include redundant emergency backup power.

In addition to one or more of the features described above, or as an alternative, according to further embodiments the at least one load may include a charger to charge the battery.

The foregoing and other features and advantages of the disclosure are apparent from the following detailed description taken in conjunction with the accompanying drawings in which:
FIG. 1 depicts an elevator system in an exemplary embodiment;
FIG. 2 depicts a drive system in an exemplary embodiment; and
FIG. 3 depicts a power distributor in an exemplary embodiment.

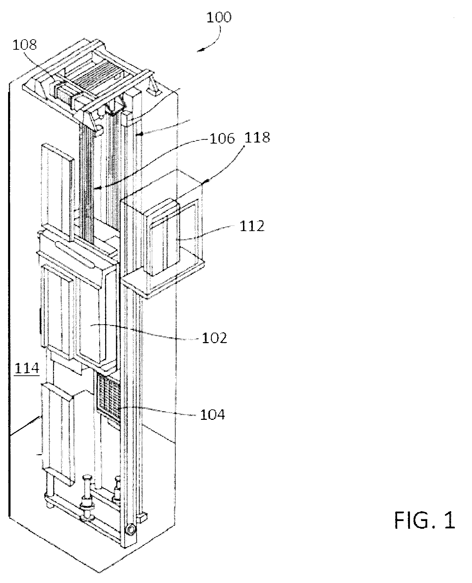

FIG. 1 is a perspective view of an elevator system 100 including an elevator car 102, a counterweight 104, roping 106, a machine 108 and a controller 112. The elevator car 102 and counterweight 104 are connected to each other by the roping 106. The roping 106 may include or be configured as, for example, ropes, steel cables, and/or coated-steel belts. The counterweight 104 is configured to balance a load of the elevator car 102 and is configured to facilitate movement of the elevator car 102 concurrently and in an opposite direction with respect to the counterweight 104 within an elevator shaft 114. The roping 106 engages the machine 108, which is part of an overhead structure of the elevator system 100. The machine 108 is configured to control movement of the elevator car 102 and the counterweight 104.

The controller 112 is located, as shown, in a controller room 118 of the elevator shaft 114 and is configured to control the operation of the elevator system 100, and particularly the elevator car 102. For example, the controller 112 may provide drive signals to the machine 108 to control the acceleration, deceleration, leveling, stopping, etc. of the elevator car 102. When moving up or down within the elevator shaft 114, the elevator car 102 may stop at one or more landings 118 as controlled by the controller 112. Although shown in a controller room 118, those of skill in the art will appreciate that the controller 112 can be located and/or configured in other locations or positions within the elevator system 100.

The machine 108 may include a motor or similar driving mechanism. In accordance with embodiments of the disclosure, the machine 108 is configured to include an electrically driven motor. The motor may be configured as a regenerative motor, as known in the art, and thus include associated components and features.

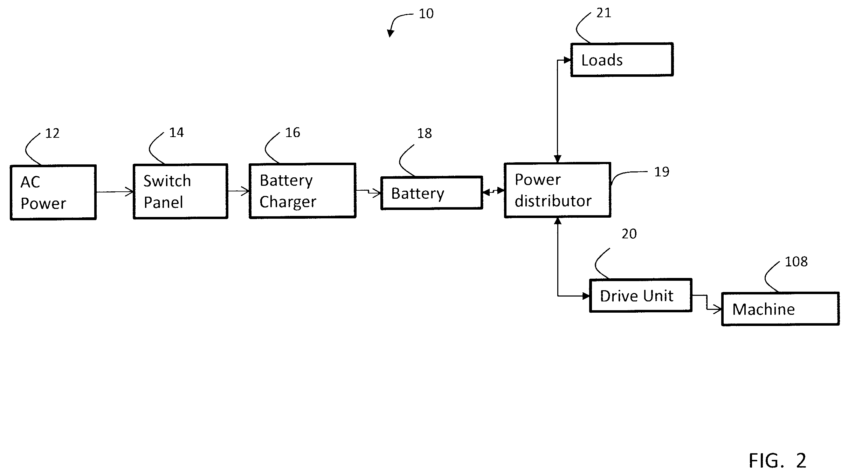

FIG. 2 is a block diagram of components of an elevator drive system 10 in an exemplary embodiment. Elevator drive system 10 includes a source of AC power 12, such as an electrical main line (e.g., 230 volt, single phase). The AC power 12 is provided to a switch panel 14, which may include circuit breakers, meters, etc. From the switch panel 14, AC power is provided to a battery charger 16, which converts the AC power to DC power to charge battery 18. The battery 18 may be a lead-acid battery, lithium-ion battery, other type of battery or combination of different type of batteries and ultra-capacitors. The battery 18 may include a plurality of cells or a plurality of individual batteries connected in parallel and/or series.

A power distributor 19 provides a connection between battery 18 and a variety of electrical loads. One exemplary load on battery 18 is drive unit 20. The drive unit 20 converts DC power from battery 18 to AC drive signals, which drive machine 108 impart motion to the elevator car 102. The AC drive signals may be multiphase (e.g., three-phase) drive signals for a three-phase motor in machine 108. Machine 108 may be regenerative motor, such that under certain conditions (e.g., empty elevator car 102 traveling upwards), electrical power is provided from machine 108, to drive unit 20, to power distributor 19 and to battery 18.

The power distributor 19 is connected to one or more other loads 21. The loads 21 represent other components in power transfer with the battery 18. The loads 21 may include devices in the elevator car 102, such as elevator car lights, elevator car user interface, elevator car brake, elevator car door motor, etc. The loads 21 may also include other components of elevator system 100, including a voice communication system, emergency lighting system, etc. The loads 21 may include a battery charger (e.g., a negative load) that provides power to the battery 18.

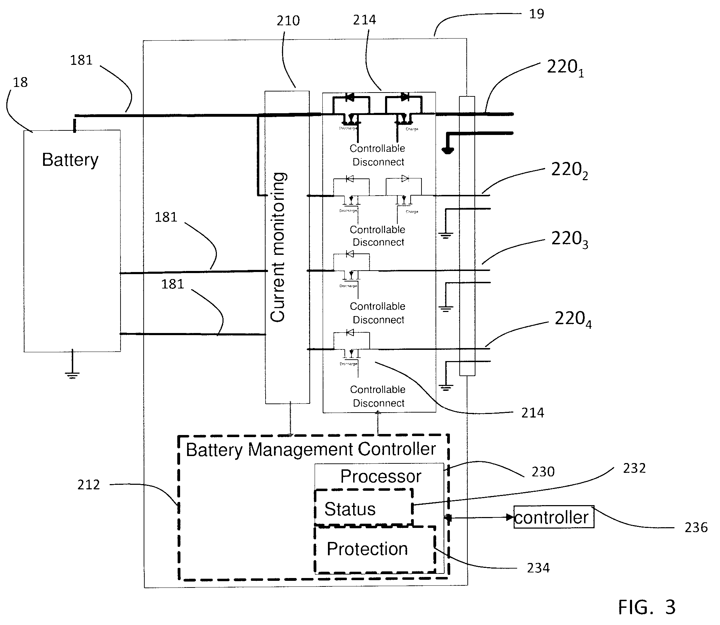

FIG. 3 depicts the power distributor 19 and battery 18 in an exemplary embodiment. The power distributor 19 is used to emulate the various divergent batteries in conventional systems, while only requiring a connection to a single battery 18. The power distributor 19 includes a current monitoring unit 210 connected to one or more battery outputs 181. The battery outputs 181 may correspond to different DC voltage levels such as 48 VDc for high power loads and 12 VDc for low power loads. The current monitoring unit 210 measures current at each battery output 181 and provides current signals to a battery management controller 212. The battery management controller 212 controls a plurality of disconnects 214. Each disconnect is coupled to at least one of the battery outputs 181. A disconnect 214 may be implemented using one or more transistors, switches, relays, etc., which are controllable by battery management controller 212. Each disconnect 214 may be unidirectional or bi-directional.

Associated with each disconnect 214 is a power distributor output 220. Each power distributor output 220 is associated with a load of the elevator system, such as the drive unit 20 or the loads 21 of FIG. 2. For example, a first power distributor output 220₁ may provide high power to the drive unit 20. The first power distributor output 220₁ may be a high power output (e.g., 48VDc) connected to a bi-directional disconnect 214 to allow current to flow from battery 18 to drive unit 20 and from drive unit 20 to battery 18 (e.g., regenerative mode). A second power distributor output 220₂ may be a low power output (12 VDc) connected to a bi-directional disconnect 214. The second power distributor output 220₂ may provide power to elevator system loads such as elevator car lights, elevator car user interface, elevator car brake, elevator car door motor, etc. The second power distributor output 220₂ may also be coupled to a low current battery charger to charge battery 18. A third power distributor output 220₃ may be a low power output (12 VDc) connected to a uni-directional disconnect 214. The third power distributor output 220₃ may provide a redundant, emergency backup source of power for emergency systems such as voice communications systems, emergency lighting systems, etc. A fourth power distributor output 220₄ may be a low power output (12 VDc) connected to a uni-directional disconnect 214, and also provide a redundant, emergency backup source of power for emergency systems.

The power distributor outputs 220 of FIG. 3 are exemplary, and it is understood that a variety of loads (both uni-directional and bi-directional) may be coupled to the power distributor 19. Thus, embodiments are not limited to the number or type of power distributor outputs 220 illustrated in FIG. 3.

The battery management controller 212 controls the disconnects 214 in response to sensed current(s) on one or more of battery outputs 181. The battery management controller 212 includes a processor 230, which may be implemented using a general-purpose microprocessor executing a computer program to implement the processed described herein. The processor 230 may implement a status module 232 for determining status of the battery 18. The processor 230 may implement a protection module 234 for detecting faults in the battery 18. The processor 230 may also communicate with a controller 236, to communicate status of the battery 18 and/or faults in the battery 18. Controller 236 may be part of elevator controller 112, or a separate power controller of the elevator system 100.

The status module 232 may detect items such as state-of-charge and state-of-health of the battery 18. The status of the battery 18 may be determined in response to one or more currents sensed at the current monitoring unit 210. If the status module 232 determines that the state-of-charge of the battery 18 exceeds a limit and/or the state-of-health of the battery 18 exceeds a limit, processor 230 may control one or more disconnects 214 to maintain proper operation of the elevator system 100. The processor 230 may also send a command to controller 236 to alter operation of the elevator system 100. For example, if the state-of-charge of the battery 18 is determined to be below a limit, then the controller 236 may be notified to operate the elevator car 102 in regenerative mode (e.g., empty car traveling upwards) so as to recharge the battery 18. In another example, if the state-of-charge of the battery 18 is determined to be below a limit, then the drive unit 20 may be notified to limit its peak power during acceleration and the battery charger 16 may be notified to increase its charging current. In another example, if the state-of-health of the battery 18 is below a limit, then the controller 236 may be notified to place the elevator system 100 in a limited service mode (e.g., reduced elevator speed, reduced door opening speed) to prevent further degradation of the battery 18. The status of the battery 18 may also be used to open one or more disconnects 214 to control power consumption of the elevator system 100.

The protection module 234 may detect battery faults such as over-current, over-voltage, under-voltage, over-temperature, under-temperature, etc. The faults of the battery 18 may be determined in response to one or more currents sensed at the current monitoring unit 210. If the protection module 234 determines that one or more faults are present, processor 230 may control one or more disconnects 214 to maintain proper operation of the elevator system 100. The processor 230 may also send a command to controller 236 to alter operation of the elevator system 100. For example, if the battery 18 experiences an over-current fault, then the controller 236 may be notified to place the elevator system 100 in a limited service mode (e.g., reduced elevator speed, reduced door opening speed) to reduce current consumption. In other embodiments, if the battery 18 experiences an over-current fault, then the controller 236 may issue a command to shut down the component causing the excess current draw. Faults in the battery 18 may also be used to open one or more disconnects 214 to control power consumption of the elevator system 100.

Embodiments provide a number of benefits over existing systems that employ a high number of batteries distributed throughout the elevator system. Embodiments provide a single battery with multiple controllable outputs. Each output may have common and/or unique characteristics, such as (i) a high-current, bi-directional output for a regenerative drive inverter with inrush current limiting turn-on characteristic, (ii) a low-current output with redundancy backup for fail-safe operation, or (iii) a fixture supply output that can be turned-off independently to shed load without effecting the controller operation. Embodiments provide a lower cost solution due to use of a single charger and battery management circuit. The required reserve backup capacity can be managed by software which adapts to changing conditions as opposed to oversizing each battery for worst-case conditions. Testing, maintenance, and replacement can be done on a single battery system versus multiple systems. The battery current monitoring of outputs can be combined or separated to provide the level of detail needed for fault management. Battery fault management can isolate a fault and continue to provide some level of functionality to the remaining system without adding the cost of separate battery subsystems

While the disclosure has been described in detail in connection with only a limited number of embodiments, it should be readily understood that the disclosure is not limited to such disclosed embodiments. Rather, embodiments of the disclosure can be modified to incorporate any number of variations, alterations, substitutions, combinations, sub-combinations, or equivalent arrangements not heretofore described, but which are commensurate with the spirit and scope of the disclosure. Additionally, while various embodiments of the disclosure have been described, it is to be understood that aspects of the disclosure may include only some of the described embodiments. Accordingly, the disclosure is not to be seen as limited by the foregoing description, but is only limited by the scope of the appended claims.

## Claims

1. An elevator system (100) comprising:
an elevator car (102);
a machine (108) to impart force to the elevator car (102);
a battery (18) to power at least one of the machine (108) and at least one load (20, 21); and
a power distributor (19) to distribute power from the battery (18) to the machine (108) and the at least one load (20, 21).

2. The elevator system (100) according to claim 1, wherein:
the battery (18) includes a plurality of battery outputs (181);
the power distributor (19) includes a plurality of disconnects (214), each disconnect (214) coupled to a respective battery output (181).

3. The elevator system (100) according to claim 2, wherein:
the power distributor (19) includes a current monitoring unit (210) to monitor current at each of the battery outputs (181).

4. The elevator system (100) according to claim 3, wherein:
the power distributor (19) includes a processor (230), the processor (230) controlling the plurality of disconnects (214) in response to the current monitoring unit (210).

5. The elevator system (100) according to claim 3 or 4 wherein:
the power distributor (19) includes a processor (230), the processor executing a status module (232), the status module (232) determining a status of the battery (18) in response to the current monitoring unit (210).

6. The elevator system (100) according to claim 5 wherein:
the status includes at least one of state-of-charge of the battery and state-of-health of the battery (18).

7. The elevator system (100) according to claim 5 or 6, wherein:
the processor (230) controls the plurality of disconnects (214) in response to the status of the battery (18).

8. The elevator system (100) according to any of claims 3 to 7, wherein:
the power distributor (19) includes a processor (230), the processor (230) executing a protection module (234), the protection module (234) determining a fault in the battery (18) in response to the current monitoring unit (210).

9. The elevator system (100) according to claim 8 wherein:
the fault includes at least one of over-current, over-voltage, under-voltage, over-temperature and under-temperature.

10. The elevator system (100) according to claim 8 or 9, wherein:
the processor (230) controls the plurality of disconnects (214) in response to the fault.

11. The elevator system (100) according to any of claims 2 to 10, wherein:
at least one of the disconnects (214) is bidirectional.

12. The elevator system (100) according to any of claims 1 to 11, wherein:
the at least one load (20, 21) includes at least one of elevator car lights, elevator car user interface, elevator car brake and elevators car door motor.

13. The elevator system (100) according to any of claims 1 to 12, wherein:
the at least one load (20, 21) includes redundant emergency backup power.

14. The elevator system (100) according to any of claims 1 to 13, wherein:
the at least one load (20, 21) includes a charger to charge the battery.
